(19) Europäisches Patentamt
European Patent Office
Office européen des brevets

(11) EP 0 557 887 B1

(12) EUROPEAN PATENT SPECIFICATION

(45) Date of publication and mention of the grant of the patent: **17.12.1997 Bulletin 1997/51**

(51) Int Cl.[6]: **C08B 37/10**, A61K 31/725

(21) Application number: **93102527.4**

(22) Date of filing: **18.02.1993**

# (54) Polysaccharide derivatives of heparin, heparan sulphate, fraction and fragments thereof, process for their preparation and pharmaceutical compositions containing them

Polysaccharidderivate von Heparin, Heparansulfate, ihre Fraktionen und Fragmente, Verfahren zu deren Herstellung und pharmazeutische Zusammensetzungen, welche diese enthalten

Dérivés polysaccharidiques d'héparine, d'héparanesulfate, leurs fractions et fragments, leur procédé de préparation et compositions pharmaceutiques les contenant

(84) Designated Contracting States:
**AT BE CH DE DK ES FR GB GR IE IT LI LU MC NL PT SE**

(30) Priority: **25.02.1992 IT MI920405**

(43) Date of publication of application:
**01.09.1993 Bulletin 1993/35**

(73) Proprietor: **OPOCRIN S.p.A.**
**41040 Corlo di Formigine (Modena) (IT)**

(72) Inventors:
- **Liverani, Lino**
  **I-41040 Corlo di Formigine (Modena) (IT)**
- **Mascellani, Giuseppe**
  **I-41040 Corlo di Formigine (Modena) (IT)**
- **Bianchini, Pietro**
  **I-41040 Corlo di Formigine (Modena) (IT)**

(74) Representative: **Minoja, Fabrizio**
**Studio Consulenza Brevettuale,**
**Via Rossini, 8**
**20122 Milano (IT)**

(56) References cited:
**EP-A- 0 347 588** **EP-A- 0 380 943**

- **AGRI. BIOL. CHEM. vol. 40, no. 12 , 1976 pages 2501 - 2502 S. HIRANO ET AL. 'N-Acylation of N-Desulfated Heparin'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to polysaccharides obtained from heparin, to pharmaceutical compositions containing them, to the process for their preparation and use in the treatment of cardiovascular disorders and in particular in the syndromes of disseminated vascular thromboses.

The products of the invention on the whole show thrombolytic activity as they stimulate the release of plasminogen activators and enhance the activity of the latter. They inhibit glycosidases and in particular platelet glucosidase, the enzyme responsible for the degradation of the endogenous heparan sulphate of the cell surface. They interact with laminine, fibronectins and vitreonectin, by modifying their conformations. They inhibit heparinase, as false substrate of it, inhibit proliferation of arterial smooth muscle cells, inhibit experimental atherosclerosis in the animal and reduce lipid synthesis in cultures of intima aorta cells.

The compounds of the invention enhance the therapeutical activity peculiar to natural polysaccharides as, in vivo, preserve for a longer time the polysaccharide structure while inhibiting the glucosidases responsible for the degradation of heparin-like drugs. The compounds of this invention were discovered during stability studies on pharmaceutical products consisting of polysaccharides alkali-treated with sodium hydroxide for removing agents causing bovine spongiform encephalopathy (BSE). The heparin polysaccharides on the market, like for instance N-acetyl-heparamine, otherwise called heparan sulphate, when treated with sodium hydroxide, especially if protracted, even at room temperature generated products having a greatly modified specific rotation. The activity of the final product of this process was surprisingly higher than that of the intermediate product.

The compounds of the present invention derive from heparin from which, following a selective controlled reaction, the $-SO_3^-$ groups of the amino sugar have been removed and replaced with acetyl. Subsequently the $-SO_3^-$ groups of iduronic acid were removed from heparin by controlled formation of epoxide

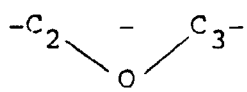

and by stereo-selective splitting, with inversion of $C_2$-$C_3$ positions under mild and/or catalyst-controlled conditions.

The compounds of the present invention may be represented by the following formula (I): where:

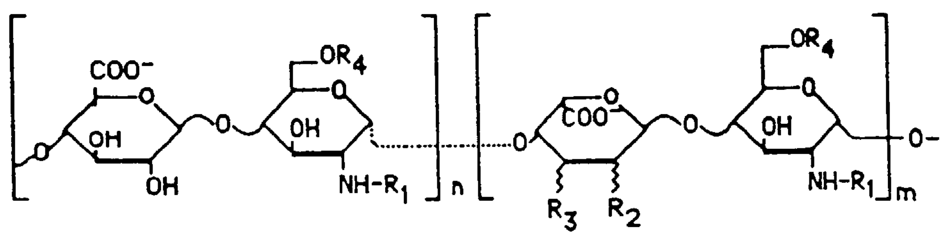

B A C A

I

where

$R_1$ = $CO-CH_3$- (≥ 35%), $SO_3^-$ (≤ 65% );
$R_2$ = $O-SO3^-$ (≤ 50%), OH (≥ 50%);
$R_3$ = α - OH or β - OH;
$R_4$ = $SO_3^-$, H, like in heparin;
n, m = integers comprised between 1 and 30, preferably corresponding to a 1:5 or a 1:4 ratio;
A = glucosamine
B = residue of glucuronic acid mostly bound with N-acetylglucosamine (A, where $R_1$ = $CO-CH_3$);
C = uronic and in particular iduronic acid ($R_2$ = $OSO_3^-$, $R_3$ = β-OH) (II) or galacturonic acid, ($R_2$=OH, $R_3$=α-OH)(III),

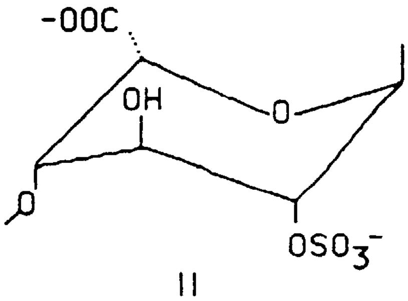

II

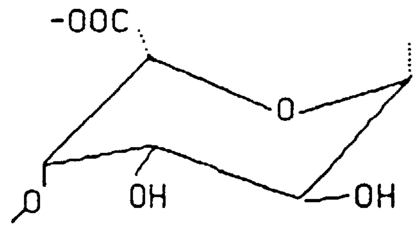

III

III ranging from 40% to 60%, preferably 50%, of the uronic acids. 15-25% of the remaining part is glucuronic acid and no less than 20% iduronic acid.

The compounds of the present invention have an average molecular mass varying from 18,000 to 2,000 daltons, preferably within the 18,000-10,000, 8,000-4,000 and 3,000-2,000 Dalton intervals; they have an $[\alpha]^{20}_D$ specific rotation ranging from +10° to +40° and an $SO_3^-/COO^-$ ratio ranging from 0.8 to 1.70.

Background of the invention

Derivatives, such as amides or esters, obtained from heparin by removing the sulphate groups from their positions and replacing them with acylic residues of various kinds are known Hirano and Ohashi (Agr. Biol. Chem., 40 (12), 2501-2502, 1976) describe a method for selective N-acylation of N-desulfated heparin with acid anydrides in formamide at room temperature without the addition of any catalyst.

Under particular conditions, inversions of the uronic acid configurations in heparin have been reported to be possible.

The European Patent Application EP 0413248 describes a process by which a re-N-acetylated compound obtained from heparin by either full or partial N-desulphation is synthetized. This process is based on potentiometric titration, with sodium hydroxide, of the free amino-group and then, on acylation with the equivalent amount of acetic anhydride only. The obtained product is claimed to be similar to heparan sulphate. The latter, however, has a different primary structure since contains mainly glucuronic acid instead of iduronic acid-Z-O-sulphate and has a sulphation degree represented by an $SO_3^-/COO^-$ ratio $\leq$ 1.25 (J.T. Gallagher, A. Walker, Biochem. J. 230, 665,1985; U. Lindahl, L. Kjellen, Thromb. Haemost. 66, (1) 44, 1991; PCT/EP 88/00967 application). The aforesaid process is based upon a controlled hydrolysis of heparin with N-desulphation and without depolymerization, followed by acylic group positioning onto specific site. These successive reactions, according to the above-mentioned application, are claimed to represent a progress compared to the hydrolysis reactions by Inoue Y. and Nagasawa K. (Carbohydr. Res. 46, 87-95, 1976) or to the acid hydrolysis reaction carried out up to 25%, as reported in EP 0165569, or to the hydrolysis and subsequent succinylations described in the Patent CH 661439A5.

Unlike the processes described in the- above patent references, a process of selective N-desulphation can take place, according to EP 0413248, if, as starting product, Heparin calcium salt is used, since, thanks to the counter-ion size, even in water a selective N-desulphation can occur without any alterations, such as yellow dyeing and O-desulphation of the product. As claimed in this reference, it is impossible to obtain good-quality N-desulphated heparin from sodium heparin. Moreover, the aforesaid reference EP0413248, by potentiometric titration with sodium hydroxide underestimates the contents of the obtained N-desulphated heparin and, as a consequence, the subsequent acetylation results incomplete. The determination of the free amine by potentiometric titration is not accurate on account of an inter- and intra-molecular salification between the $-SO_3^-$ and $-NH_2$ groups. As a matter of fact, a 9% amount of free amine (Glc NH2 at 93.5 ppm) remains in the finished product as results from the $^{13}$C.NMR reported in Figure 1 of EP 0413248.

The Canadian Patent Application no. 2007616 describes heparin derivatives endowed with inhibitory activity on the formation of renal calcoli, used in nephrolithiasis therapy. Such heparin derivatives are obtained by treatment with alkali in presence of reducing agents and have an $SO_3^-/COO^-$ ratio comprised between 1.20 and 1.70.

M. Jaseja et al. (Can. J. Chem., 67, 1449, 1989) and R.N. Rej and A.S. Perlin (Carbohydr. Res. 200, 437, 1990) had already described the modification by treatment with alkali, in the heparin structure, of the α-L-uduronic acid-2-sulphate into α-L-galacturonic acid by base-catalyzed inversion through U2-U3 epoxide.

It has now been found that the selective N-desulphation and the subsequent N-acetylation together with inversion of uronic acid configuration on heparin structure lead to products endowed with surprising and unexpected activity.

The products of the present invention have the following biological activities: they inhibit α-glucosidase, which activity is interesting for therapeutic purposes against pre-diabetic conditions and/or simple obesity. In particular, the

products of the invention inhibit the platelets endoglycosidase (Aldberg A. et al., Biochemistry 19, 5755, 1980). This enzyme is responsible for the degradation of the parietal endogenous heparan sulphate. The degradation of the parietal endogenous heparan sulphate is considered as one of the causes of atherosclerosis pathogenesis (H. Engelberg in "Heparin and prevention of atherosclerosis" Wiley-Liss, New York 1990, p 9). The products of the invention favour and enhance the activity of the heparin-like drugs, as inhibitors of heparinase and heparitinase, the enzymes degrading the said drugs. They interact with fibronectin and vitreonectin. They inhibit the proliferation of the smooth muscle cells and human leukocyte elastase.

The compounds of the present invention can be obtained from heparin having a molecular mass comprised between 10,000 and 18,000 or heparin fractions having a 4,000-8,000 molecular mass or heparin fragments having a molecular mass comprised between 3,000-2,000 daltons, by means of:

- controlled and selective N-desulphation;
- selective N-acetylation on glucosamine;
- controlled epoxidation between the U2-U3 carbons with elimination of the $-OSO_3^-$ group of uronic acid and
- splitting of the epoxide with inversion of configuration.

The sequence of the reactions can even be modified, as the sequence of the reactions on the uronic acid can take place first and then those on the amino-sugar. Both the reactions of N-desulphation and U2-U3 epoxidation occur according to a 1st order kinetics and therefore can be controlled at will. The stereo-specific splitting of the epoxide takes place by heating in slightly alkaline or preferably neutral medium.

The N-desulphation reaction, according to the invention, occurs in aqueous medium at a temperature ranging from 40° to 100°C, preferably at 60°C. The reaction occurs at acid pH ranging from 0.1 to l, preferably 0.1. The acidifying agent is a mineral acid like, for instance, hydrochloric acid.

The N-desulphate intermediate can be isolated according to conventional methods. According to an invention method, the mixture of the acid reaction is neutralized with alkali or alkaline-earth metals hydroxides and the intermediate is precipitated with a proper solvent such as methanol. The solid product is filtered and dried.

Preferably, the N-desulphate intermediate is not isolated and the following N-acetylation can be directly performed in the reaction medium.

The N-acetylation reaction is carried out by means of proper acylating agent, such as acetic anhydride. The reaction takes place in aqueous medium and at a pH ranging from 8 to 10. The alkalifying agent is chosen among those known in the art, such as for instance alkali metal hydroxides. The N-acetylated product is isolated following conventional procedures.

The reaction of regio-selective O-desulphation, with epoxide formation, is carried out in aqueous medium at alkaline pH and a temperature from 35 to 60°C, preferably from 55° to 60°C, for a period lasting between 1 and 4 hours, depending on the desired O-desulphation degree. The subsequent splitting of the epoxide occurs in water at pH 7-8 and at boiling temperature.

The sequence of O-desulphation with inversion of configuration, i.e. the formation and the following splitting of the epoxide, can even be performed directly in slightly alkaline solution, for example an aqueous solution of an alkali metal carbonate or bicarbonate, at boiling temperature.

The final product is isolated by conventional techniques, such as neutralization of the reaction mixture for example with a suitable organic or inorganic acid and precipitation with a water-miscible organic solvent, such as acetone, methanol or ethanol.

The following examples further illustrate the invention wherein examples 1 to 4, describe the preparation of intermediate products prior the epoxidation step, which are not within the ambit of the claimed subject-matter.

The present text adopts the following abbreviations: L-iduronic acid-2-sulphate = IdoA-$SO_3$; Glucosamine N-sulphate = GlcN-$SO_3$; Glucosamine N-acetylated - GlcN-Ac; D-glucuronic acid = GlcA or G. When numbers are present in the formulae, like for instance -1, -2, -3, etc. they indicate the carbons in the positions 1, 2, 3, etc. of glucosamine; U-1, U-2, etc. are the carbon atoms in the positions 1, 2 of the uronic acids. For example I-1S indicates the anomeric carbon of L-iduronic acid-2-sulphate, etc.

The potentiometric determinations of sulphur, uronic acids and $SO_3^-/COO^-$ were performed in aqueous solution, according to Mascellani G. et al. (I1 Farmaco Ed. Pr. 43, 165-175, 1988). The $^{13}C$.NMR spectra were performed with 10-15% $D_2O$ solution on Bruker Ac 300 spectrometer with 5 mm dual probe operating at 75.47 MHz. The chemical shifts were recorded versus the internal standard of methanol at 51.75 ppm versus the external standard TMS according to Casu B. et al. (Biochem. J. 197, 599-609, 1981). The ratio between the signal integrals for calculating functional groups was obtained according to Casu B. et al. (Arzneim. Forsch. 33, 135-142, 1983).

Specific rotations were recorded by a Perkin-Elmer polarimeter Mod. 241 at the Na and Hg wavelength. Molecular masses were calculated by HPLC technique, in accordance with the method described by Volpi N., Mascellani G., Bianchini P., Anal. Biochem. 200, 100-108 (1992). The anticoagulant activity (APTT) was assessed according to Basu

D. et al. (New Engl. J.Med. 287, 324, 1972), with activated and improved kit Thrombophax (Ortho Diagnostic System).

**Example 1**

**Kinetics of heparin N-desulphation (OP 753)**

In a reaction vessel equipped with thermostatic bath, stirrer, dropper, thermometer probe and pH probe, the heparin batch 90327 (g 100) was loaded with 900 ml of water heated to 60°C. On completion of dissolution, at constant temperature of 60°C, 40 ml of concentrated HCl and water to 1000 ml were added. The reaction mass was stirred for 4 hours. In the meantime samplings of 30 ml at a time were performed (Tab.1). Soon after the samples were cooled, neutralized to pH 6 with 2 N NaOH, added to 1.6 g of sodium acetate, diluted to 80 ml with water and eventually, added to 160 ml of methanol. The precipitates formed in the samples were collected and dried up.

Table 1

| hours | code | sampling volume | obtained g |
|---|---|---|---|
| 1 | OP753/1 | 30 ml | 2.5 |
| 2 | OP753/2 | 30 ml | 2.3 |
| 3 | OP753/3 | 30 ml | 2.6 |
| 4 | OP753/4 | 910 ml | 86 |

The residual final volume (910 ml) was diluted, added to 52 g of sodium acetate, adjusted to pH 6 with 2 N NaOH and treated with 5.6 liters of methanol. The precipitate was collected and dried. An amount of 86 g of N-desulphated heparin was obtained (global recovery: 93.4%). The isolated products (2 g each) were separately placed into flasks containing 20 ml of water and slowly treated over 0.5 hour with 0.2 ml of acetic anhydride dropping through a micropipette. pH 8 was maintained with N NaOH. At the end of the reaction, pH was adjusted to 5.5. Sodium acetate (g 6) was added and the volume of the solution adjusted to 100 ml with water. Methanol (200 ml) was added. The precipitates were collected. Their chemico-physical characteristics as well as their biological activity (APTT) are analyzed and reported in Table 2.

Table 2

| Code | g | APTT U/mg | $SO_3^-/COO^-$ | N-desulf.* % |
|---|---|---|---|---|
| OP753 1/1 | 1.82 | 67.00 | 2.17 | 15.79 |
| OP753 2/1 | 1.80 | 29.00 | 2.02 | 31.58 |
| OP753 3/1 | 1.91 | 11.50 | 1.94 | 40.00 |
| OP753 4/1 | 1.70 | 8.80 | 1.85 | 49.47 |
| Heparin 90327 | | 196.00 | 2.32 | 0.00 |

*from: (2.32 - $SO_3^-/COO^-$) : 0.95 = x : 100
where: 2.32 = $SO_3^-/COO^-$ of EP 90327
0.95 : molar fraction of N-sulphation of EP 90327 deduced by $^{13}$C.NMR, 0.05 being constituted of pre-existing N-acetyl.

**Example 2**

**Kinetics of N-desulphation of Heparin (OP 743)**

Heparin batch 90327 (9 g), water (86.4 ml) and HCl (3.6 ml) were loaded into a reaction vessel equipped with stirrer and thermostatic bath. The resulting pH was 0.58. The reaction mixture was maintained at 60°C.

Samples of 30 ml were taken after 4, 5.5 and 7 hours and cooled to 20°C, adjusted to pH 8.5 and separately treated with 2.5 milliequivalents (meq) of acetic anhydride (0.24 ml), by means of a microburet, in 1 hour interval. On completion of the reaction the solutions are diluted to 150 ml and added to 300 ml of methanol. The precipitates were collected and separately dried. The samples OP743/1, 0P743/2, OP743/3 were obtained. Their weights, N-desulphation percentage and APTT values are reported in Table 3.

Table 3

| Code | hours | g | APTT U/mg | $SO_3^-/COO^-$ | N-desulf.* % |
|---|---|---|---|---|---|
| OP743/1 | 4 | 2.88 | 7.2 | 1.86 | 48.32 |
| OP743/2 | 5.5 | 2.71 | 3.5 | 1.82 | 52.63 |
| OP743/3 | 7 | 2.91 | 2.8 | 1.80 | 54.74 |
| Heparin 90327 | | | 196 | 2.32 | 0.0 |

*from: (2.32 - $SO_3^-/COO^-$) : 0.95 = x : 100
where: 2.32 = $SO_3^-/COO^-$ of EP 90327
0.95 : molar fraction of N-sulphation of EP 90327 deduced by means of 13C.NMR, the 0.05 being composed of pre-existing N-acetyl.

The chemical kinetics values obtained in the examples 1 and 2 are summarized in Tab.4.

Table 4

| Hydrolysis hours | $SO_3^-/COO^-$ | N-desulphation % | Residual N-sulphation % | APTT U/mg |
|---|---|---|---|---|
| 0.0 | 2.32 | 0.0 | 95 | 196 |
| 1.0 | 2.17 | 15.79 | 79.21 | 67 |
| 2.0 | 2.02 | 31.58 | 63.42 | 29 |
| 3.0 | 1.94 | 40.0 | 55.0 | 11.5 |
| 4.0 | 1.85 | 49.47 | 45.53 | 8.8 |
| 4.0 | 1.86 | 48.32 | 46.68 | 7.2 |
| 5.5 | 1.82 | 52.63 | 42.37 | 3.5 |
| 7.0 | 1.80 | 54.74 | 40.26 | 2.8 |

Fig.1.A reports the curve of the residual percentage of -NH-$SO_3^-$, N-desulphation and of APTT with time. The correlation between the logarithm of the residual -NH-$SO_3^-$ and time is linear up to 50% removal of -$SO_3^-$ (Fig. 1B). The removal, by controlled hydrolysis, of the -$SO_3$- from the A-2 position of the aminosugar follows a 1st order kinetics. Under the set operating conditions the 50% presence of free amine results to enhance the stabilization of the residual sulphate group by slowing down its gradual hydrolysis. The sole anticoagulant activity (APTT) results virtually eliminated after the 50% removal of the $SO_3^-$ groups.

**Example 3**

**N-desulphated and N-acetylated heparin**

Into a reaction vessel equipped with heating coat, stirrer, and two dripping funnels and pH-detecting electrode, heparin (105 g) and water (1 1) were conveyed. The reaction mass was heated to 60°C. 37% hydrochloric acid (42 ml) is added. After 4 hours' stirring and heating, the N-desulphation reaction was stopped by cooling the mass and adding 58 ml of 8N NaCl. At room temperature, pH was adjusted to 8.5 with 2N NaOH. Through a dripping funnel acetic anhydride (8.5 ml) was added to the reaction mass over a 0.5 hour interval. Under stirring, NaOH was simultaneously added to maintain reaction pH between 7.5 and 9.0.

After 1 hour rest the solution was diluted to 3 liters and added to 150 g of sodium acetate and 12 liters of methanol.

The white precipitate was collected by filtration, washed with acetone and dried. The resulting N-desulphated-N-acetylated heparin (95.7 g) has the following characteristics: $[\alpha]_D^{20}$ = 49°, Sulphur 9.36%, uronic acids 31.3%, $SO_3^-/COO^-$=1.81. In the 13C.NMR spectrum the signal of the free amine at 93.4 ppm is absent and the following sulphate molar fractions: I1-S≈0.80; $A_6$-O-$SO_3$≈0.60; Glc-$NSO_3$≈0.45 (according to the calculation reported by Casu, Arzneim. Forsch. 33, 135-142, 1983) are derived.

**Example 4**

Low molecular mass Heparin (Mr 7,000) was treated at pH 0.4 with hydrochloric acid at 60°C for 5 hours. This reaction closely follows example 3.

A product was obtained having Sulphur = 8.0%; Uronic acids 32.1%, $SO_3^-/COO^-$ =1.51, molecular mass: 6,500 Daltons.

## Example 5

### N-desulphated-N-acetylated heparin containing galacturonic acid

N-desulphated-N-acetylated heparin (5 g - batch OP 799C), obtained following the example 3, having the following characteristics: $[\alpha]_D^{20}$= +49°, $SO_3^-/COO^-$= 1.69, Sulphur = 7.90%, uronic acids 28.29%, molecular mass 9,800 daltons, 13C.NMR signals (expressed in p.p.m.) at the following δ values: 102.11, (I1-S), 99.64 (A1-NS), 96.55 (A1-$NA_C$), 56.21 (A2-$NA_C$) and having the following mean sulphate molar fractions: A6-O-$SO_3^-$≈0.61; A2-$NSO_3^-$≈0.38; U-2-$OSO_3$~0.78 was added to 100 ml of solution adjusted to $\overline{1}$N with sodium hydroxide.

The solution was heated to 36°C for 2.5 hours, cooled, treated with 20% acetic acid up to pH 5.5 and added to 300 ml of methanol. The precipitate was collected and dried. 4.54 g of product was obtained with the following characteristics $[\alpha]_D^{20}$= 56.4°, -$SO_3^-/COO^-$= 1.57. The 13C.NMR spectrum shows typical signals, different from those of N-acetylated heparin and in particular at the following δ values (expressed in p.p.m.): 104.2 (U1); 101 (U1S); 99 (A1S) 97. 3 96.5; 96.1; 78.8; 78.1; 75; 72; 71.4; 68.1; 62; 60; 55.5; 53.8; 52.6.

A 5% solution of the obtained product (2 g) was prepared in sterile pyrogen-free water, filtered through sterilizing 0.22 µm filter and poured into vials under aseptic conditions. The vials were autoclaved at 135°C for 30', (EEC Directive III/3298. 1991) for removing the BSE causing agent. A product was obtained having $[\alpha]_D^{20}$= +42°, -$SO_3^-/COO^-$ = 1.57 (by potentiometry).

The fibrinolytic activity of the product was 30% higher than that of the OP 799c product.

## Example 6

### N-desulphated-N-acetylated heparin containing galacturonic acid (HAI821)(N-acetyl-galacturonylheparin)

N-acetyl heparin (4 g), obtained from Heparin batch 11435, as described in the example 1, and containing 36.58% of N-acetyl, was solubilized in 200 ml of 2% $Na_2CO_3$ solution and refluxed for 3 hours (103°C). After cooling, pH was adjusted to 5.5 with acetic acid under vacuum-stirring until effervescence was over. 15 g of sodium acetate and 2.2 volumes of methanol were added. The resulting precipitate was collected by filtration and dried. The obtained OP HAI 821 (3.56 g) had the following characteristics: $[\alpha]_D^{20}$= +25°, Sulphur= 7.83%, uronic acids=30.20%, -$SO_3^-/COO^-$= 1.57. The 13C.NMR showed the signals peculiar to galacturonic acid at δ 102 (U-1), 70.5 (U-2). In addition, from the integrals the following ratios were calculated:

$$\frac{\text{A2-NSO3-}}{\text{A2-NSO3- + A2NA}_C} = 0.63$$

$$\frac{\text{A6-OSO3-}}{\text{A6-OSO3- + A6-OH}} = 0.61$$

$$\frac{\text{U1-OSO3-}}{\text{U1-OSO3- + U1-OH}} = 0.33$$

where $A_2$-$NSO_3^-$ means the carbon in the position 2 of glucosamine N-sulphate ($GlcNSO_3$), A2-NAC the carbon in the position 2 of glucosamine N-acetylated (GlNAc), A6 the carbon in the position 6 of the glucosamine 6-sulphate or unsulphate (A6-OH), $U_1$ the anomeric carbon of the iduronic acid sulphated in the position 2 (-$OSO_3$) or unsulphated (-OH).

## Example 7

### Galacturonyl-heparin HI 822

A preparation similar to that described in the example 6, except that the alkaline solution containing heparin had refluxed for 20 hours instead of 3 hours (at 103°C). The resulting product (3.13 g; yield 78.25%) had $[\alpha]_D^{20}$= +10.1°, Sulphur= 7.35%, uronic acids=29.67%, -$SO_3^-/COO^-$= 1.50. From the integrals of the 13C.NMR signals the following ratios were obtained:

$$\frac{U1\text{-}OSO3}{U1\text{-}OSO_3 + U1\text{-}OH} = 0.12$$

$$\frac{A2\text{- }N\text{-}SO3}{A2\text{- }N\text{-}SO_3 + A2\text{-}NAC} = 0.77$$

$$\frac{A6\text{-}OSO3}{A6\text{-}OSO_3 + A6\text{-}OH} = 0.61$$

**Example 8**

**N-desulphated-N-acetylated heparin containing galacturonic acid**

From N-acetyl-heparin having an $-SO_3^-/COO^-= 1.52$, by the same method as that described in the example 7 a product having $-SO_3^-/COO^-= 0.85$ was obtained.

From the 13C.NMR spectrum a sulphation molar fraction was deduced in A6- of the amino sugar of

$$\frac{A6\text{ - }OSO3}{A6\text{-}OSO_3 + A6\text{-}OH} = 0.6$$

**Example 9**

**N-desulphated-N-acetylated heparin containing galacturonic acid (HAI 907/8)**

N-acetylated heparin (4 g of OP 799c prepared following the example 3) having $[\alpha]_D^{20}= 49°$, was solubilized in 300 ml of water containing 2% of $Na_2CO_3$. After a 8 hour reflux, it was cooled and vacuum-treated with strong anion exchange resin in $H^+$ form (Relite CF H+ Sybron Italia SpA) until effervescence had stopped. pH was- 5. The solution was adjusted to pH 7.5 with N NaOH, then percolated on 25 ml of Amberlite IRA 400 resin in $OH^-$ form, (1.5 cm diameter column). The percolate was vacuum-concentrated to 150 ml, added to 18 g of NaOAc at pH 5.5 and treated with 2.2 volumes of methanol. The precipitate was collected and dried. An amount of 3.38 g was obtained (Yield: 84.5%). The 13C.NMR spectrum showed characteristic signals (expressed in p.p.m.) at the following $\delta$ values: 103.05 (G-1, I-1), 101 (U-1), 98.98 (AI-N-Ac), 67.99 (A-6-$OSO_3^-$), 61.51 (A-6-OH), 56.17 (A-2N-Ac), 23.94 ($CH_3$-).

The product has: sulphur = 5.89%, uronic acids = 31%, $SO_3^-/COO^-= 1.15$ deduced by potentiometry.

**Example 10**

**N-desulphated-N-acetylated heparin containing galacturonic acid**

5 g of Heparin N-desulphated and re-acetylated according to the example 2, and having N-acetylation fraction = 0.68, $-SO_3^-/COO^-= 1.65$, $[\alpha]_D^{20}= 51°$, was 5% solubilized in 0.9 M NaOH. It was heated to 60°C for 2.5 hours and then cooled. Its pH was neutralized with HCl. The resulting solution had: $[\alpha]_D^{20}= +82°$. After a 2.5 hour reflux in water, the solution was cooled and treated with 500 ml of methanol. The formed precipitate was collected and dried. The obtained N-desulphated-N-acetylated heparin (4 g - yield: 82%) contains galacturonic acid. The product has the following characteristics: $[\alpha]_D20 = +21°$, $SO_3^-/COO^- =1.19$, sulphur 5.65%, uronic acids 28.8%, molecular mass 11,300. The 13C-NMR is reported in Fig. 2.

**Example 11**

**N-desulphated-N-acetylated low molecular weight heparin containing galacturonic acid**

10 g of Low Molecular Mass Heparin obtained according to the example 3 of the patent no. EP 0221977 was N-desulphated and N-acetylated following the example 2 (sample OP743/3). The obtained intermediate product had an N-acetylation fraction of 0.71, $SO_3^-/COO^- = 1.84$, $[\alpha]_D^{20} = 48°$. This intermediate (5 g) was treated as in the example 6. The obtained product had: $SO_3^-/COO^- = 1,18$, sulphur = 6.9%, uronic acids = 35.4%, $[\alpha]_D^{20} = +23°$, molecular mass=

4,100 daltons.

**Example 12**

**N-desulphated-N-acetylated heparin oligosaccharide containing galacturonic acid**

10 g of Heparin Oligosaccharide obtained as described in the example 4 of the US patent no. 4933326 was processed exactly as indicated in the above example 11.

A product was obtained having $SO_3^-/COO^-$ = 1,2, $[\alpha]_D^{20}$ = 28°, molecular mass= 2,480 daltons.

**Example 13**

**Epoxidation kinetics of heparin**

7 g of Heparin (batch 90327) was dissolved in 50 ml of water pre-heated to 60°C. Once temperature had stabilized, 6N NaOH was added up to 0.6 N in an overall volume of 70 ml. The solution was maintained at 60°C. At intervals, 5 ml samples were taken, added to 2.5 of HCl and adjusted to pH 6 and to 10 ml volume with water. The resulting solutions were analyzed by Perkin Elmer polarymeter model 241 at the wavelenghts of the Sodium D band (589 nm), at 578 nm (Hg), 546 (Hg), 436 (Hg) and 365 nm (Hg). The relevant values are reported in Tab. 5 and Fig. 3.

Table 5

| Kinetics of epoxidation at 60°C in 0.6 N solution of NaOH | | | | | |
|---|---|---|---|---|---|
| Specific rotation [α] | | | | | |
| minute | 589 | 578 | 546 | 436 | 365 nm |
| 0 | 49.0 | 51.1 | 57.7 | 94.7 | 142.3 |
| 15 | 54.2 | 56.5 | 63.6 | 104.6 | 157.5 |
| 30 | 60.2 | 62.7 | 70.9 | 118.7 | 175.5 |
| 45 | 64.1 | 66.6 | 75.3 | 124.1 | 187.8 |
| 75 | 72.0 | 75.1 | 84.8 | 140.1 | 211.8 |
| 105 | 78.1 | 81.4 | 92.0 | 152.0 | 228.8 |
| 135 | 80.6 | 84.0 | 95.0 | 157.1 | 245.3 |
| 165 | 78.1 | 81.4 | 92.2 | 152.7 | 241.3 |
| 195 | 79.4 | 82.7 | 93.4 | 155.0 | 245.0 |
| 255 | 79.0 | 82.4 | 93.2 | 154.5 | 242.6 |
| 315 | 81.6 | 85.0 | 96.1 | 159.4 | 241.0 |
| 375 | 79.8 | 83.2 | 94.1 | 155.8 | 243.0 |

At all the considered wavelenghts a practically right line appears until about 105 minutes of reaction. Afterwards, slight variations in [α] with time were recorded. The reaction resulted inhibited after 2 hours. Fig. 3A.

The upward pent of the curve of the sodium D band at 589 nm (Fig. 3B) corresponds to a polynomial equation of the second order, like: $y = a + bx + cx^2$ with $R^2$ -0.999.

Being the epoxide concentration proportional to $(\alpha_\infty - \alpha_o)$ and the residual heparin concentration at any time proportional to $(\alpha_\infty - \alpha_t)$, where $\alpha_\infty$ = specific rotation at the end of the reaction, $\alpha_t$= specific rotation at the t time, $\alpha_o$= specific rotation at the 0 time (heparin specific rotation), for instance at the wavelength 589 of sodium, by plotting log $(\alpha_\infty - \alpha_t)$ versus the times, a linear function was obtained (Fig. 4). It was apparently a first order reaction.

The fractions sampled after 30', 75', 135' and 315' were diluted to 20 ml, added to sodium acetate up to 20%, adjusted to pH 5.4 and precipitated with 2 volumes of methanol. The collected and dried precipitate supplied the $SO_3^-/COO^-$ values reported in Table 6.

Table 6

| Time minutes | $SO_3^-/COO^-$ | I1-S* % residue | 2-O-desulphation % |
|---|---|---|---|
| 0 | 2.32 | 86.5 | 13.5 |
| 30' | 2.11 | 65.5 | 34.5 |
| 75' | 1.91 | 45.5 | 54.5 |
| 135' | 1.8 | 34.5 | 65.5 |
| 315' | 1.66 | 20.5 | 79.5 |

Notes * The residual percentage of the $SO_3^-$ group in U-2 of the iduronic acid-2-sulphate was calculated by integrating the 13C.NMR I-1S signals (according to Casu B. et al., Arzneim.Forsch. 33, 135-142, 1983), having considered as 100 the sum of the integrals relevant to U-1 of the iduronic acid-2-sulphate and of glucuronic acid.

The curve resulting from plotting on a semilogarithmic diagram the log[residual I1-S] values is a linear function till at least 75 minutes of reaction (Fig. 5). The O-desulphation reaction was iduronic acid-selective and follows an apparently first order kinetics. The 13C.NMR spectrum of the product isolated after 315' is consistent with the structure containing epoxide. It shows that the molar fractions A2N-$SO_3$ and A6$OSO_3$ are respectively equal to 0.90 and 0.6, just like the parent heparin. By plotting the 2-O-desulphation percentage with the variation in $[\alpha]_D^{20}$ the correlation reported in Table 7 and in Figure 6 is obtained.

Table 7

| Selective 2-O-desulphation percentage-$[\alpha]_D^{20}$ correlation | | | |
|---|---|---|---|
| times minutes | ($\alpha$t - $\alpha$o ) (y) | U-2-desulphation % | chemical U-2-desulphation (%) |
| 0.00 | 0.00 | 13.50* | 0.00 |
| 15.00 | 5.20 | | |
| 30.00 | 11.20 | 34.50 | 21.00 |
| 45.00 | 15.10 | | |
| 75.00 | 23.00 | 54.50 | 41.00 |
| 105.00 | 29.10 | 65.50 | 52.00 |
| 315.00 | 32.60 | 79.5 | 66.00 |

Note
* The parent heparin contained only 86.5% of iduronic acid 2-sulphate, the remainder being glucuronic acid.

**Example 14**

**Preparation of heparin derivative containing 2,3-anhydrous-a-L-Gulopyranosyluronic acid.**

10 g of Ep 90327 was added to 100 ml of 1N NaOH in a suitable reaction vessel and heated to 60°C for 3.5 hours under stirring. On completion of the reaction the solution was neutralized with N HCl to pH 5.4. By adding 2.2 volumes of methanol a product was obtained which, after drying, gave 7.42 g (74.2% yield) of epoxide OP 778/2 having the following characteristics: sulphur 7.3%, uronic acids:28.9%, $-SO_3^-/COO^-$= 1.53. The 13C-NMR spectrum (fig.7) shows the signals (in ppm) at the following $\delta$ values: 104.2 (G-1;I-1); 101.3(I1-SO3); 98(A-1); 97(U-1); 79.5(A-4); 78.3(U-5); 72 (U-4. A-3. A-5); 68.2(A-6); 60(A-2); 53.5(U-3); 52.6(U-2).

From the signal integrals the following values of molar fractions resulted: (G-1 + I-1)≈0.31; I-1S=0.10; U-1≈0.57;

$$\frac{\text{A2-NSO3}}{\text{A2-NSO}_3 + \text{A}_2\text{-Nac}} = 0.92; \qquad \frac{\text{A-6-OSO3}}{\text{A-6-OSO}_3 + \text{A-6-OH}} = 0.62$$

from which the summation of sulphate groups per disaccharide was derived: $\Sigma\ SO_3 = 1.64$.

**Example 15**

**N-acetylheparin epoxidation and inversion**

N-acetyl heparin OP799C (20 g) was dissolved as quickly as possible in 200 ml of 2 N sodium hydroxide at 6°C, 26°C and 36°C and immediately diluted to 5% with water at the same temperature. Sodium hydroxide was then 1N.

The solutions, in sealed containers, were placed in thermostats at the indicated temperatures. Samplings from each solution were made after 30, 60, 150 and 300 minutes. The samples were neutralized with 20% acetic acid and diluted to 2.5%. Specific rotations were recorded. The $[\alpha]_D^{20}$ values are reported in Table 8.

Table 8

| $[\alpha]_D^{20}$ | | | |
|---|---|---|---|
| Hours | 6°C | 26°C | 36°C |
| 0.00 | 48.5° | 48.5° | 48.5° |
| 0.50 | 49.4° | 49.2° | 52.0° |
| 1.00 | 50.4° | 51.0° | 53.4° |
| 2.50 | 49.8° | 52.9° | 56.4° |
| 5.00 | 50.4° | 54.3° | 63.2° |

and in the figures 8A and 8B. From the latter, the logarithm of the epoxidation rate of N-acetyl-heparin results to be proportional to its temperature. The samples treated at 36°C for 2.5 and 5 hours were poured into vials to be sealed and autoclaved at 121°C for 1 hour. The products were then isolated as described in the example 5. Samples of N-acetyl-galacturonyl heparin, coded OP 2,5 and OP 5, respectively having: $[\alpha]_D^{20}$ =39.1° and 35.9°, $SO_3^-/COO^-$ =1.54 and 1.42, were obtained.

**Example 16**

**Biological activity**

**1.** The activity of the compounds was evaluated in vitro as inhibitory effect on the inactivation of high-affinity heparin (HA-Ep) by platelet endoglycosidase according to Olderg et al. (Biochemistry 19, 25, 5762-68, 1980).

Table 9

| **Inactivation of thrombin by antithrombin III, in presence of HA-heparin treated with platelet endoglycosidase in presence of the compounds of the invention acting as endoglycosidase inhibitors** | | |
|---|---|---|
| | Inactivated thrombin Units (U) | % Activity of thrombin |
| Thrombin+buffer | O | 100 |
| Thrombin + HA Ep + buffer | 0.45 | 9.1 |
| Thrombin + HA Ep + endoglycosidase + buffer | 0.15 | 70.6 |
| Thrombin + HA Ep + endoglycosidase + inhibitor Example 10 + buffer | 0.42 | 15.5 |
| Thrombin + HA Ep + endoglycosidase + inhibitor OP 5 (Ex.15) + buffer | 0.37 | 26 |

Thrombin was determined by chromogenic method with the kit S-2238 (AB Kabi - Stockholm). The kit already contained antithrombin III (AT III).

**2.** The thrombolytic activity in vivo was determined by the test of venous thrombosis induced by vena cava ligature, according to Reyers et al. (Thromb. Res. 18, 699, 1980) with a 5 mg/kg iv treatment 24 hours after thrombosis induction and thrombi withdrawal 2 hours after treatment. The results are shown in Table 10.

Table 10

| **Reduction in thrombus weight** | |
|---|---|
| Example 5 | 71% |
| HAI 821 Example 6 | 47% |

**3.** The inhibition of proliferation of smooth muscle cells was achieved following Bianchini P. et al. (Thromb. Res., 62 177-188, 1991). The results are reported in Table 11.

Table 11

| Percent variations compared to control of cultured smooth muscle cells (SMC Inhibition) | | | |
|---|---|---|---|
| days | 2 | 4 | 6 |
| Control | 100±4.1 | 100±3.4 | 100±6.1 |
| Heparin lot 756 10 mcg/ml | 92±3.8 | 103±4.1 | 89±3.5 |
| Heparin lot 756 100 mcg/ml | 80±2.9 | 67±4.3 | 68±4.7 |
| Compound OP 753 3/1 Example 1 10 mcg/ml | 97±3.5 | 92±2.9 | 70±5.1 |
| Compound OP753 3/1 Example 1 100 mcg/ml | 71±6.7 | 82±4.6 | 65±5.4 |
| Compound HAI 821 Example 6 10 mcg | 95±3.4 | 95±3.1 | 90±5.1 |
| Compound HAI 821 Example 6 100 mcg/ml | 90±2.8 | 75±2.9 | 69±3.1 |

**4.** The inhibition of heparinase was assessed on the basis of the inhibitory power of the compounds of the invention on the heparin enzymatic degradation by heparinase I, II and III.
The experiment was carried out under the experimental conditions described by Volpi N., Mascellani G. and Bianchini P. (Anal. Biochem., 200, 100, 1992). Heparin was incubated with heparinase I (EC 4.2.2.7), heparinase II (Sigma, no assigned EC number) and heparinase III (EC 4.2.2.8) with and without the compound of this invention. The results are reported in Table 12. Heparin was completely degraded by heparinases. The compound HI822 (Example 7) was attacked by the enzymes by 7.65% only. HI822, when added to heparin, inhibited the heparinases action up to 74.5-87.4%.

Table 12

| Inhibition of Heparinase I, II, III | | | | |
|---|---|---|---|---|
| Constitutive disaccharides | A* Heparin | B** Inhibitor | C*** Heparin +Inhibitor | D° Inhibition % |
| ΔDUAGlucNAc | 5.06 | 3.93% | 121.7% | - |
| ΔDUA2SGlcN | 0.42 | 0.22% | 28.2% | 71.8 |
| ΔDUAGlcNS | 3.23 | 1.42% | 92.7% | 7.3 |
| ΔDUAGlcNAc,6S | 0.29 | 0.10% | 96.9% | 3.1 |
| ΔDUAGlcNS,6S | 6.65 | 0.40% | 23.1% | 76.9 |
| ΔDUA2SGlcNS | 12.27 | 0.11% | 12.6% | 87.4 |
| ΔDUA2SGlcNS,6S | 72.08 | 1.47% | 25.5% | 74.5 |

* (Heparin+Heparinase I-II-II. %Disaccharide composition) Heparin batch 90450 is considered as internal standard. It is fully degraded by heparinase I, II, III and its constitutive disaccharides are quantified by HPLC.

** (Ex.7 Inhibitor+heparinase I, II, III. Recovery vs A) The percent recoveries of the constitutive disaccharides obtained from the compound HI822 are compared to the corresponding values of heparin disaccharides.

*** (Heparin+Ex.7 inhibitor+heparinase I, II, III. Recovery vs theoretical value of A+B). Heparin batch 90450+inhibitor HI822 in the 1:4 proportion are enzymatically degraded by heparinase I, II, III under the same experimental conditions. The disaccharide recovery is calculated vs the expected theoretical value of A+B.

° (%Inhibition). High inhibition level (74.5-87.4%) in particular vs the demolition of sequences composed of di- and trisulfate disaccharides.

The compounds described in this invention are useful for preparing a drug for the treatment of pathologies requiring the inhibition of the platelet glycosidase or endogenous heparinase I and/or II or III, or a fibrinolytic and/or antiatherosclerotic activity.

The compounds of the invention can be administered in doses to be fixed by the clinician.

The compounds of the invention are administered in pharmaceutical formulations containing said compounds as active principles, alone or possibly in association with other active principles having similar or complementary activity.

The formulations of the invention are prepared according to well-known methods, like those described in the "Remington's Pharmaceutical Sciences Handbook", Mack Pub.Co. USA.

The said pharmaceutical formulations are suitable for enteral, parenteral and topical administration.

Examples of parenteral pharmaceutical formulations are injectable sterile solutions or suspensions.
Examples of oral formulations are capsules, tablets, syrups, drinkable solutions or suspensions.
Examples of enteral formulations are suppositories.
Examples of topical formulations are salves, ointments, prolonged release forms.

## Claims

1. Heparin derivatives of formula (I):

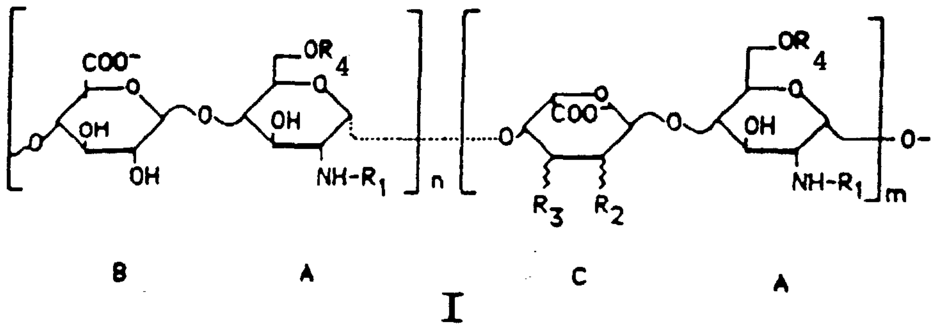

I

where:

$R_1$ $CO\text{-}CH_3$ (≥ 35%), $SO_3^-$ (≤ 65%);
$R_2 = O\text{-}SO_3^-$ (≤ 50%), OH (≥ 50%);
$R_3 = \alpha$ - OH or $\beta$ - OH;
$R_4 = SO_3^-$, H, like in heparin;
n, m = integers comprised between 1 and 30, preferably corresponding to a 1:5 or a 1:4 ratio;
A = glucosamine
B = residue of glucuronic acid mostly bound with N-acetylglucosamine (A, where $R_1 = CO\text{-}CH_3$);
C = an uronic acid selected from iduronic acid ($R_2 = OSO_3$-, $R_3 = \beta$-OH) (II), glucuronic acid or galacturonic acid, ($R_2$ = OH, $R_3 = \alpha$-OH) (III),

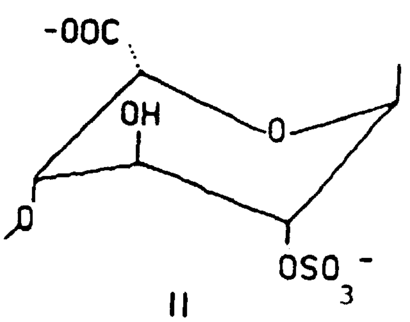

II

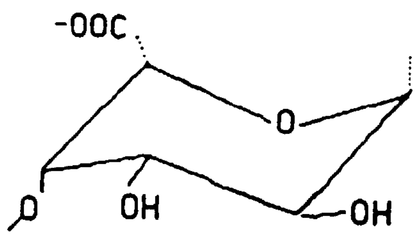

III

with the proviso that 40-60% of uronic acids consists of galacturonic acid III, 15-25% of glucuronic acid and the remainder of iduronic acid (II).

2. Heparin derivatives according to claim 1 having an $SO_3^-/COO^-$ ratio comprised between 0.8 and 1.7.

3. Heparin derivatives according to claim 1-2, having average molecular masses ranging from 18,000 to 2,000 daltons.

4. Heparin derivatives according to claims 1 to 3, having a specific rotation comprised between +10° and +40°C.

5. A process for the preparation of the derivatives of claims 1 to 4, which process involves the following steps:

- -N-desulphation of heparin, fractions and fragments thereof;
- N-acetylation of glucosamine residues;
- -O-desulphation of the position 2 of the uronic acid by epoxidation;
- splitting of the epoxide with inversion of the configuration of the carbons U2-U3 of the uronic acid.

**6.** A process for the preparation of the products according to the claims 1-4, which process involves the following steps:

- regioselective O-desulphation by epoxidation;
- splitting of the epoxide with inversion of- the U2-U3 carbons configuration;
- N-desulphation;
- N-acetylation.

**7.** A process according to the claims 5 or 6, wherein the N-desulphation is carried out in acid aqueous medium at a pH ranging from 0.1 to 1 and at temperatures ranging from 40°C to 100°C.

**8.** A process according to the claims 5-7, wherein the acetylation is performed with acetic anhydride in aqueous medium at pH ranging from 8 to 10.

**9.** A process according to the claims 5-8, wherein the epoxidation is performed in 0.1 to 1 N solution of alkaline hydroxide at a temperature comprised between 35° and 60°C.

**10.** A process according to the claims 5 or 6, wherein the splitting of the epoxide with inversion of configuration is achieved in slightly alkaline - or, better, neutral medium of distilled water at boiling temperature and for times ranging from 1 and 4 hours.

**11.** A process according to the claims 5 or 6, wherein the epoxide formation and its splitting, with the inversion of its configuration, can be directly performed in a slightly alkaline solution of either sodium or potassium carbonate or bicarbonate, at boiling temperatures.

**12.** Pharmaceutical formulations containing, as active principle, an heparin derivative of the claims 1-4.

**13.** Use of the compounds of claims 1 to 4 for the preparation of a medicament inhibiting glycosidases and heparinase, having fibrinolytic, antiinflammatory and antiatherosclerotic activities.

**Patentansprüche**

**1.** Heparin-Derivate der Formel (I)

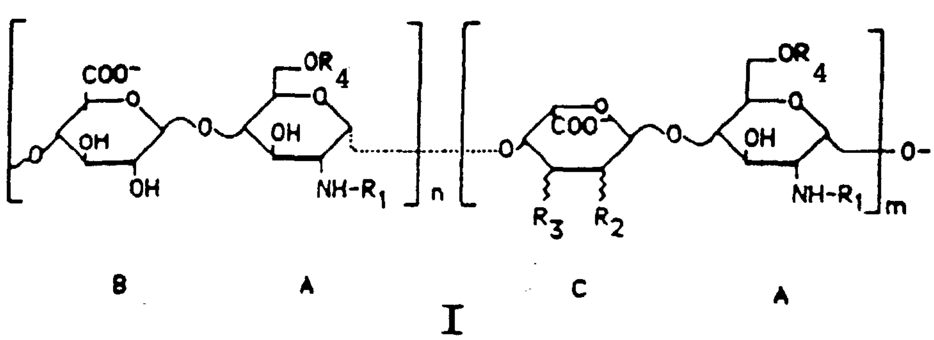

I

worin bedeuten:

$R_1$ CO-$CH_3$ (≥ 35 %), $SO_3^-$(≤ 65 %);
$R_2$ $OSO_3^-$ (≤ 50 %), OH (≥ 50 %);
R3 α-OH oder β-OH;

$R_4$ $SO_3^-$, H wie in Heparin;
n, m ganze Zahlen zwischen 1 und 30, vorzugsweise solche, die einem Verhältnis 1:5 oder 1:4 entsprechen;
A Glucosamin
B den Glucuronsäure-Rest, meistens gebunden an (über) N-Acetylglucosamin (A, worin $R_1$ für $CO\text{-}CH_3$ steht);
C eine Uronsäure, ausgewählt aus Iduronsäure ($R_2$ $OSO_3^-$, $R_3$ β-OH) (II), Glucuronsäure oder Galacturonsäure ($R_2$ OH, $R_3$ α-OH) (III),

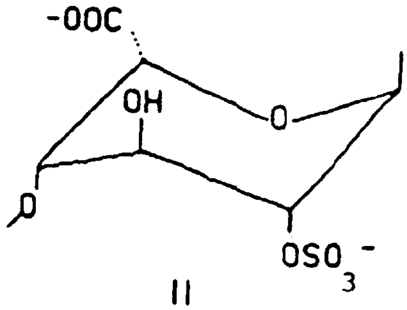
II

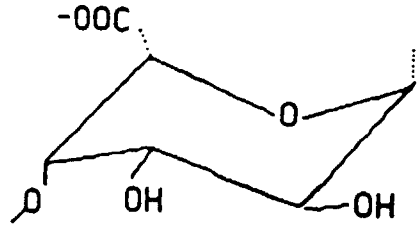
III

mit der Maßgabe, daß 40 bis 60 % der Uronsäuren bestehen aus Galacturonsäure (III), 15 bis 25 % Glucuronsäure und zum Rest aus Iduronsäure (II).

**2.** Heparin-Derivate nach Anspruch 1, die ein $SO_3^-/COO^-$-Verhältnis zwischen 0,8 und 1,7 aufweisen.

**3.** Heparin-Derivate nach den Ansprüchen 1 und 2, die durchschnittliche Molekularmassen in dem Bereich von 18 000 bis 2 000 Dalton haben.

**4.** Heparin-Derivate nach den Ansprüchen 1 bis 3, die eine spezifische Drehung zwischen +10° und +40° aufweisen.

**5.** Verfahren zur Herstellung der Derivate nach den Ansprüchen 1 bis 4, das die folgenden Stufen umfaßt:

- die -N-Desulfatierung von Heparin, Fraktionen und Fragmenten davon;
- die N-Acetylierung von Glucosamin-Resten;
- die -O-Desulfatierung der Position 2 der Uronsäure durch Epoxidation;
- die Aufspaltung des Epoxids unter Inversion der Konfiguration der U2-U3-Kohlenstoffatome der Uronsäure.

**6.** Verfahren zur Herstellung der Produkte nach den Ansprüchen 1 bis 4, das die folgenden Stufen umfaßt:

- die regioselektive O-Desulfatierung durch Epoxidation;
- die Aufspaltung des Epoxids unter Inversion der U2-U3-Kohlenstoffatome (Konfiguration),
- die N-Desulfatierung;
- die N-Acetylierung.

**7.** Verfahren nach den Ansprüchen 5 oder 6, bei dem die N-Desulfatierung in einem sauren wäßrigen Medium bei einem pH-Wert in dem Bereich von 0,1 bis 1 und bei Temperaturen in dem Bereich von 40 bis 100°C durchgeführt wird.

**8.** Verfahren nach den Ansprüchen 5 bis 7, bei dem die Acetylierung mit Essigsäureanhydrid in einem wäßrigem Medium bei einem pH-Wert in dem Bereich von 8 bis 10 durchgeführt wird.

**9.** Verfahren nach den Ansprüchen 5 bis 8, bei dem die Epoxidation in einer 0,1 bis 1 N Lösung eines alkalischen Hydroxids bei einer Temperatur zwischen 35 und 60°C durchgeführt wird.

**10.** Verfahren nach den Ansprüchen 5 oder 6, bei dem die Aufspaltung des Epoxids unter Inversion der Konfiguration in einem schwach alkalischen oder besser in einem neutralen Medium von destilliertem Wasser bei der Siedetemperatur und für Zeitspannen in dem Bereich von 1 bis 4 h durchgeführt wird.

**11.** Verfahren nach den Ansprüchen 5 oder 6, bei dem die Epoxid-Bildung und die Epoxid-Aufspaltung unter Inversion seiner Konfiguration direkt in einer schwach alkalischen Lösung entweder von Natriumcarbonat oder Kaliumcarbonat oder -bicarbonat bei den Siedetemperaturen durchgeführt wird.

**12.** Pharmazeutische Formulierungen, die als Wirkstoff (aktives Prinzip) ein Heparin-Derivat nach den Ansprüchen 1 bis 4 enthalten.

**13.** Verwendung der Verbindungen nach den Ansprüchen 1 bis 4 zur Herstellung eines Glycosidase- und Heparinase-inhibierenden Arzneimittels, das fibrinolytische, antiinflammatorische und antiarteriosklerotische Aktivitäten aufweist.

**Revendications**

**1.** Dérivés de l'héparine de formule (I) :

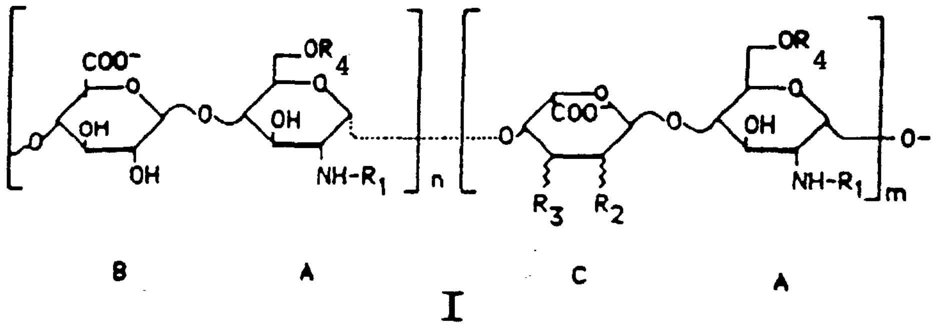

I

dans laquelle :

- $R_1$ = CO-$CH_3$ (≥ 35%), $SO_3^-$ (≤ 65%) ;
- $R_2$ = O-$SO_3^-$ (≤ 50%), OH (≥ 50%) ;
- $R_3$ = α - OH ou β - OH ;
- $R_4$ = $SO_3^-$, H, comme dans l'héparine ;
- n, m = entiers de 1 à 30, de préférence correspondant à un rapport 1:5 ou à un rapport 1:4 ;
- A = glucosamine ;
- B = reste d'acide glucuronique essentiellement lié à la N-acétylglucosamine (A, où $R_1$ = CO-$CH_3$) ;
- C = un acide uronique choisi parmi l'acide iduronique ($R_2$ = $OSO_3^-$, $R_3$ = β-OH) (II), l'acide glucuronique et l'acide galacturonique, ($R_2$ = OH, $R_3$ = α-OH) (III),

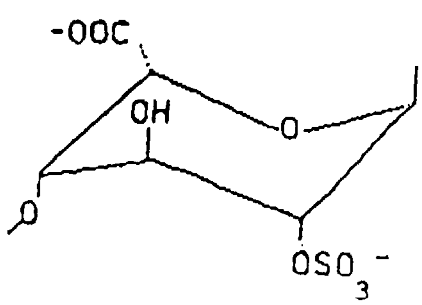

(II)

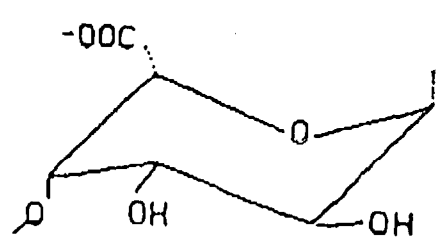

(III)

à la condition que 40-60% des acides uroniques consistent en acide galacturonique (III), 15-25%, en acide glucuronique, et le reste, en acide iduronique (II).

**2.** Dérivés de l'héparine selon la revendication 1, ayant un rapport $SO_3^-/COO^-$ compris entre 0,8 et 1,7.

**3.** Dérivés de l'héparine selon les revendications 1 et 2, ayant des masses moléculaires moyennes se situant dans la plage allant de 18 000 à 2 000 daltons.

**4.** Dérivés de l'héparine selon les revendications 1 à 3, ayant une rotation spécifique comprise entre +10° et +40°.

**5.** Procédé de préparation des dérivés tels que définis aux revendications 1 à 4, lequel procédé met en jeu les étapes suivantes :

- N-désulfatation de l'héparine, de fractions et de fragments de celle-ci ;
- N-acétylation de restes glucosamine ;
- O-désulfatation de la position 2 de l'acide uronique par époxydation ;
- clivage de l'époxyde avec inversion de la configuration des carbones U2-U3 de l'acide uronique.

**6.** Procédé de préparation des produits tels que définis aux revendications 1 à 4, lequel procédé met en jeu les étapes suivantes :

- O-désulfatation régiosélective par époxydation ;
- clivage de l'époxyde avec inversion de la configuration des carbones U2-U3 ;
- N-désulfatation ;
- N-acétylation.

**7.** Procédé selon la revendication 5 ou 6, dans lequel la N-désulfatation est effectuée dans un milieu aqueux acide à un pH se situant dans la plage allant de 0,1 à 1 et à des températures se situant dans la plage allant de 40°C à 100°C.

**8.** Procédé selon les revendications 5 à 7, dans lequel l'acétylation est effectuée avec de l'anhydride acétique dans un milieu aqueux à un pH se situant dans la plage allant de 8 à 10.

**9.** Procédé selon les revendications 5 à 8, dans lequel l'époxydation est effectuée dans une solution 0,1 à 1 N d'hydroxyde alcalin à une température comprise entre 35 et 60°C.

**10.** Procédé selon la revendication 5 ou 6, dans lequel le clivage de l'époxyde avec inversion de la configuration est obtenu dans un milieu légèrement alcalin ou, mieux, neutre, d'eau distillée, à la température d'ébullition et pendant des laps de temps se situant dans la plage allant de 1 à 4 heures.

**11.** Procédé selon la revendication 5 ou 6, dans lequel la formation de l'époxyde et son clivage, avec l'inversion de sa configuration, peuvent être directement effectuées dans une solution légèrement alcaline soit de carbonate de sodium ou de potassium, soit de bicarbonate de sodium ou de potassium, aux températures d'ébullition.

**12.** Formulations pharmaceutiques contenant, comme principe actif, un dérivé de l'héparine tel que défini aux revendications 1 à 4.

**13.** Utilisation des composés tels que définis aux revendications 1 à 4, pour la préparation d'un médicament inhibant les glycosidases et l'héparinase, ayant des activités fibrinolytiques, anti-inflammatoires et antiathérosclérotiques.

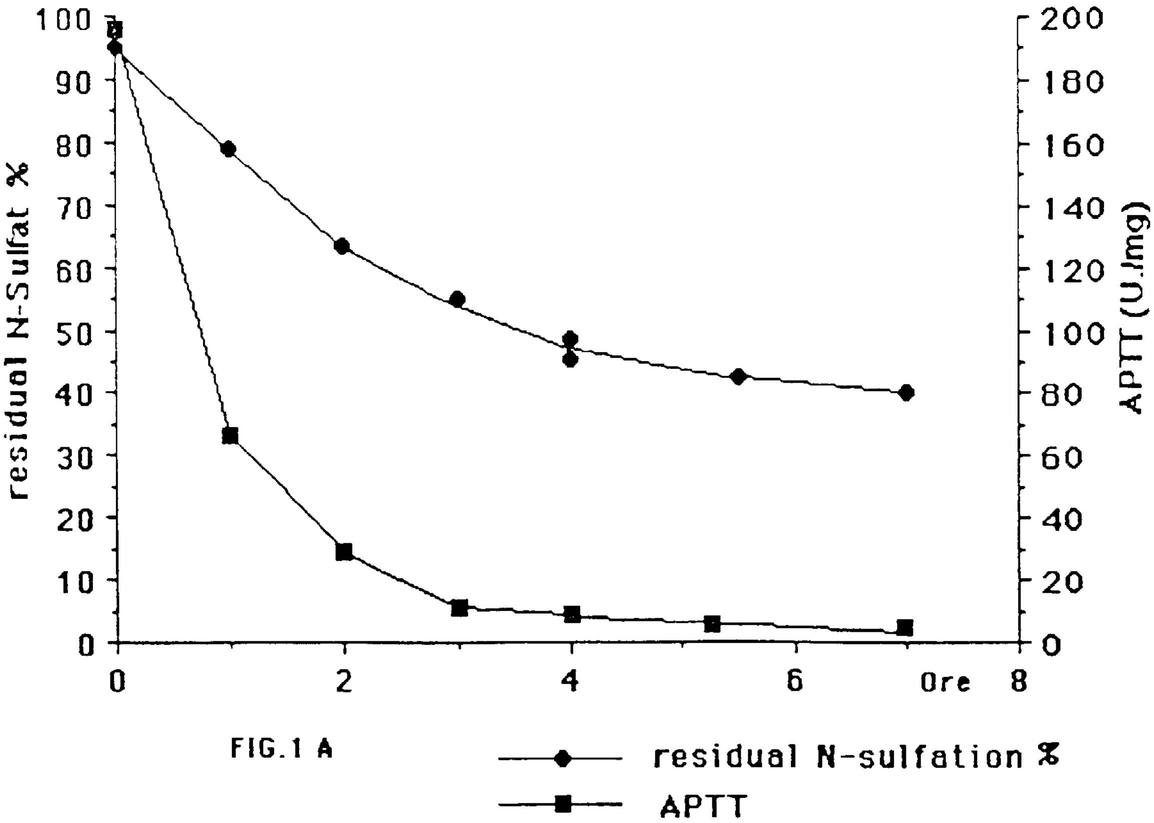


FIG.1 A

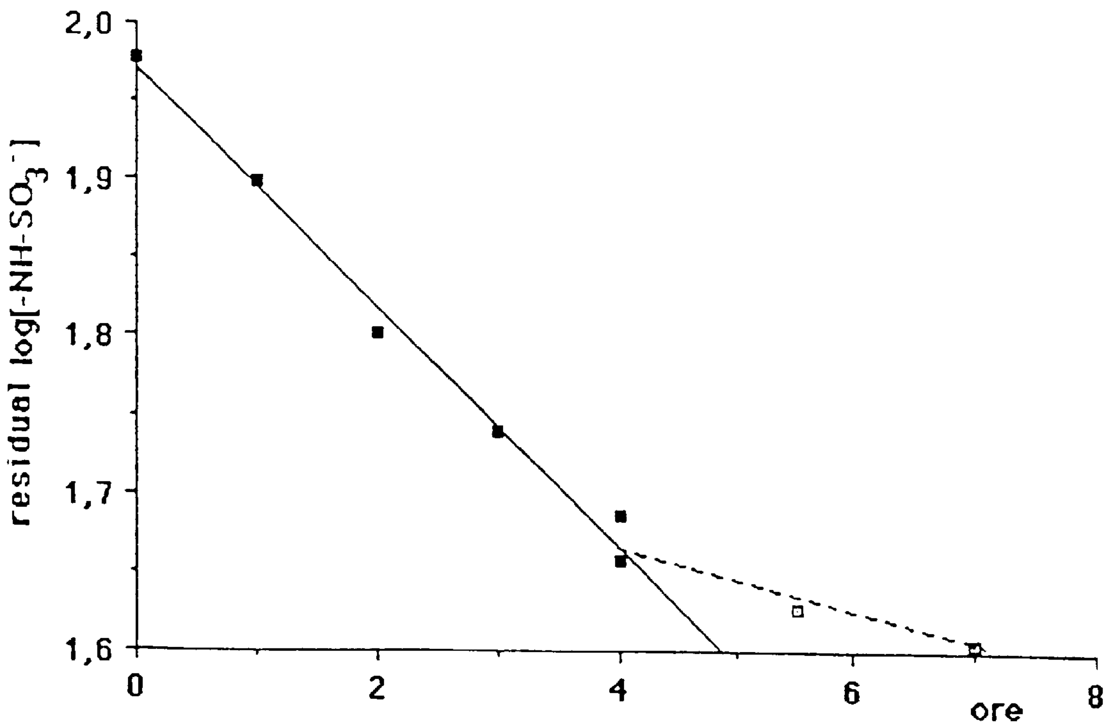


FIG.1 B y = 1.9710 - 7.5811e-2x R = 0.994

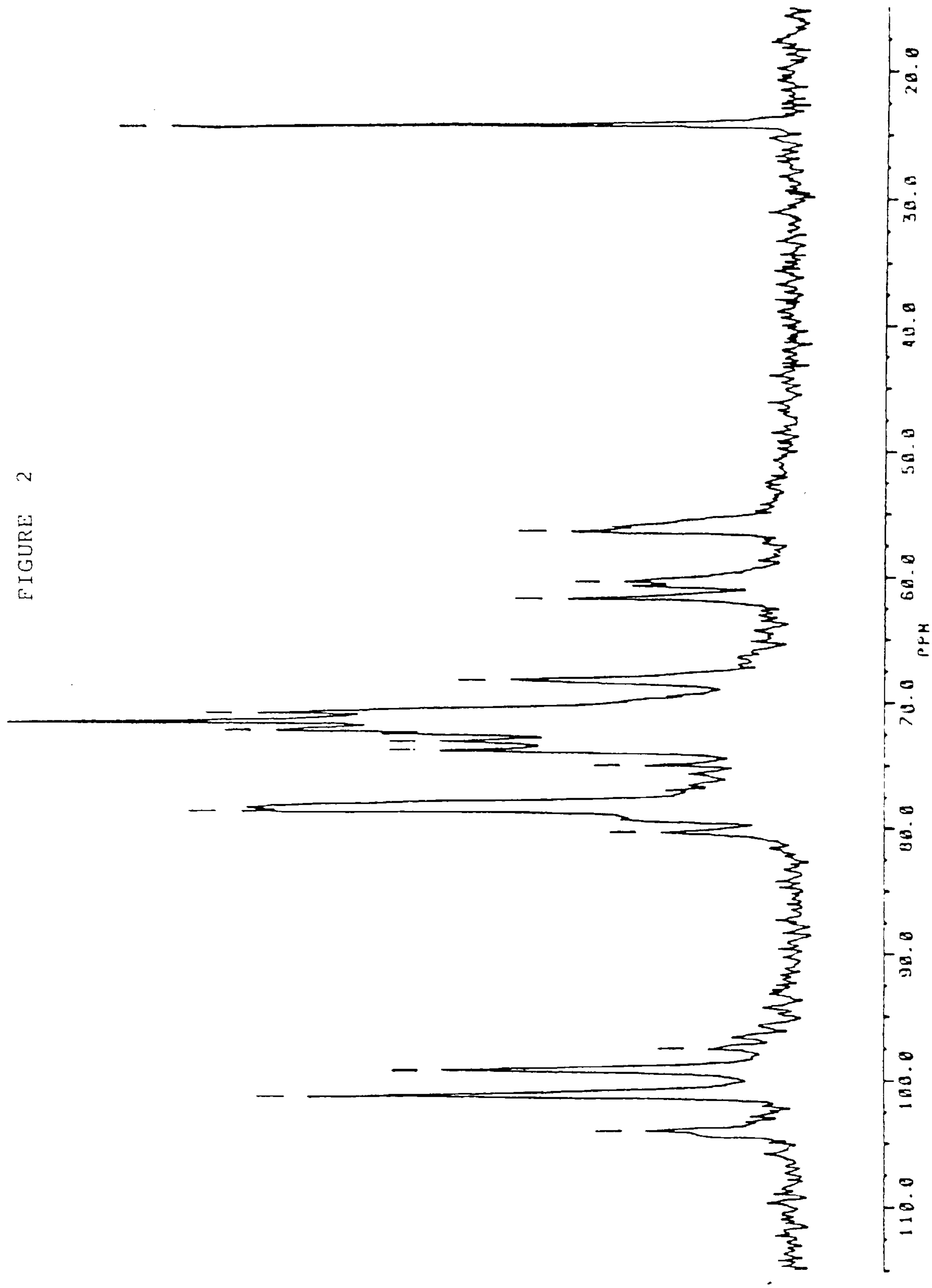


FIGURE 2

FIG. 3A. Heparin epoxidation kinetics.

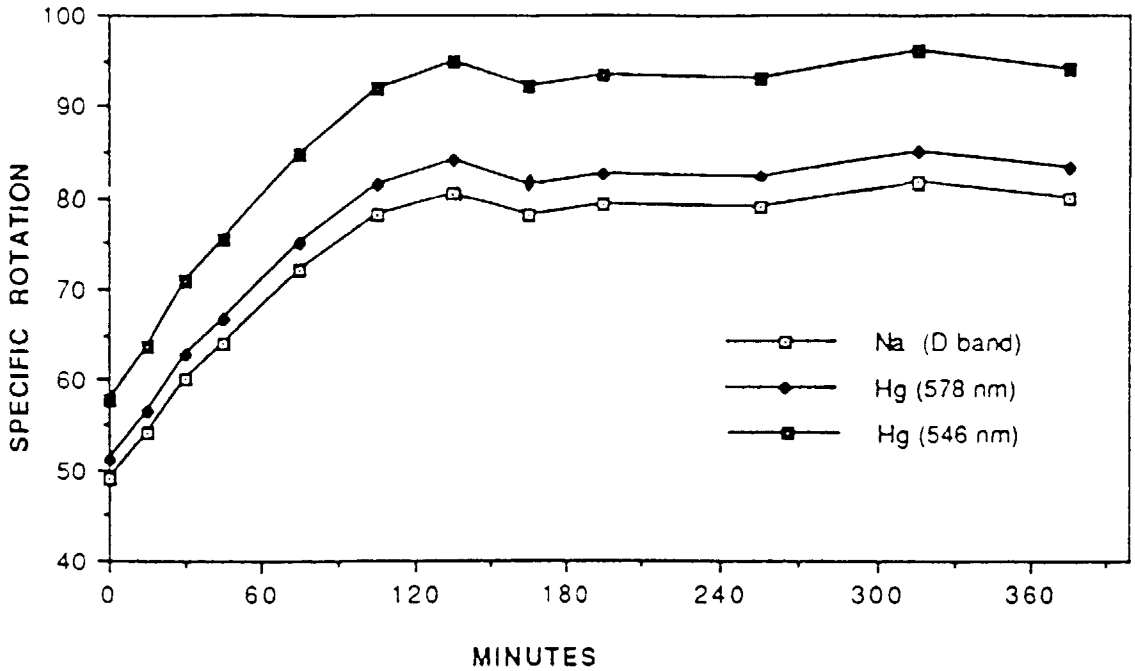


Fig. 3B. Heparin epoxidation kinetics.

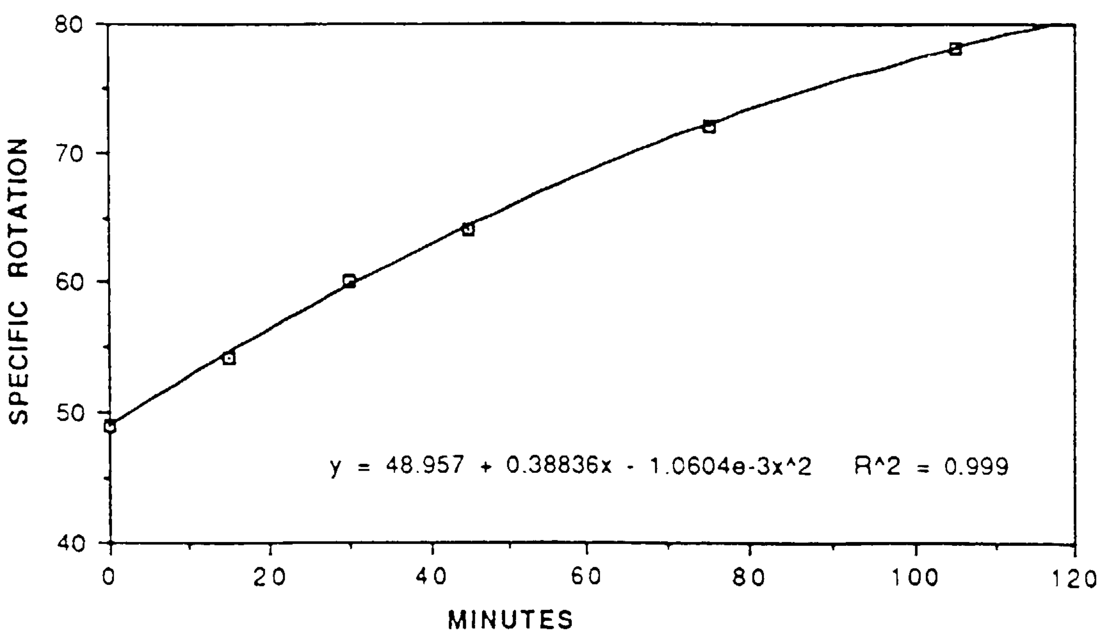

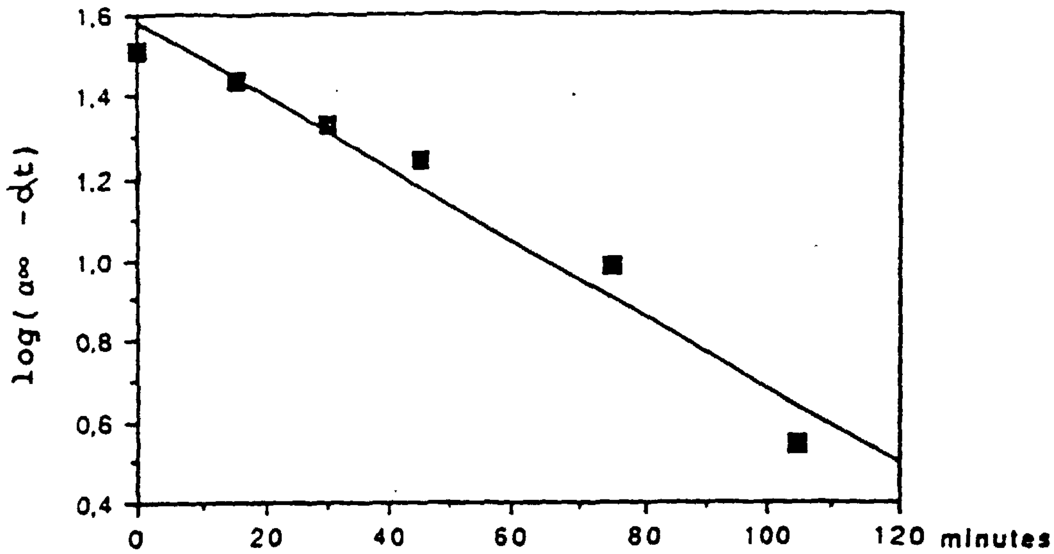


Fig.4 Heparin epoxidation kinetics

y = 1.5813 - 9.0294e-3x R^2 = 0.963

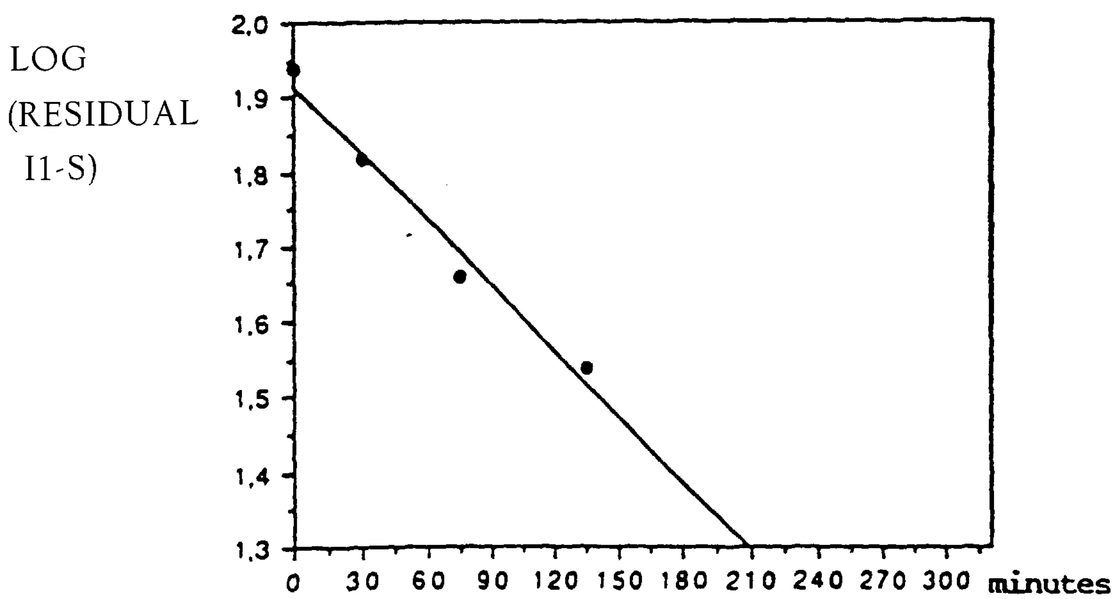


Fig. 5. 2-0-DESULPHATION of heparin • log I2S residue

y = 1.9138 - 2.9377e-3x R^2 = 0.974

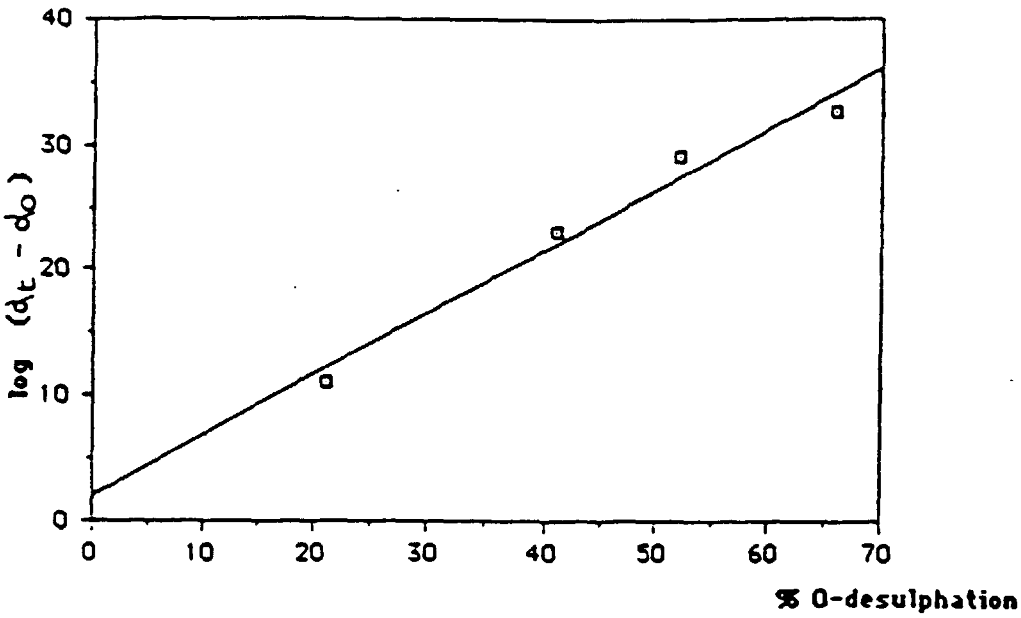


Fig.6 $[\alpha]_D^{20}$/$U_2$-O-desulphation correlation

y = 2.0365 + 0.48752x R^2 = 0.971

FIGURE 7

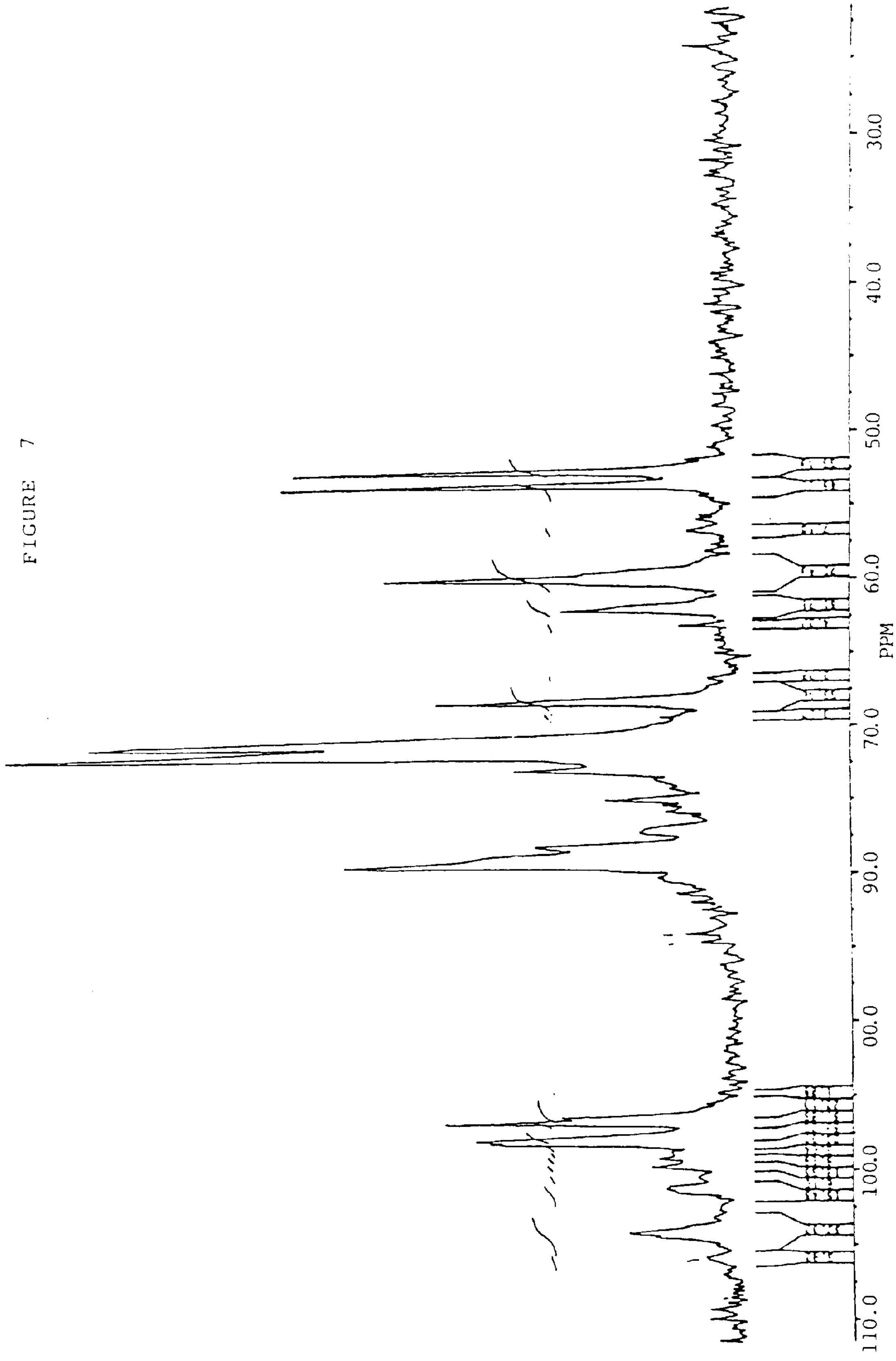

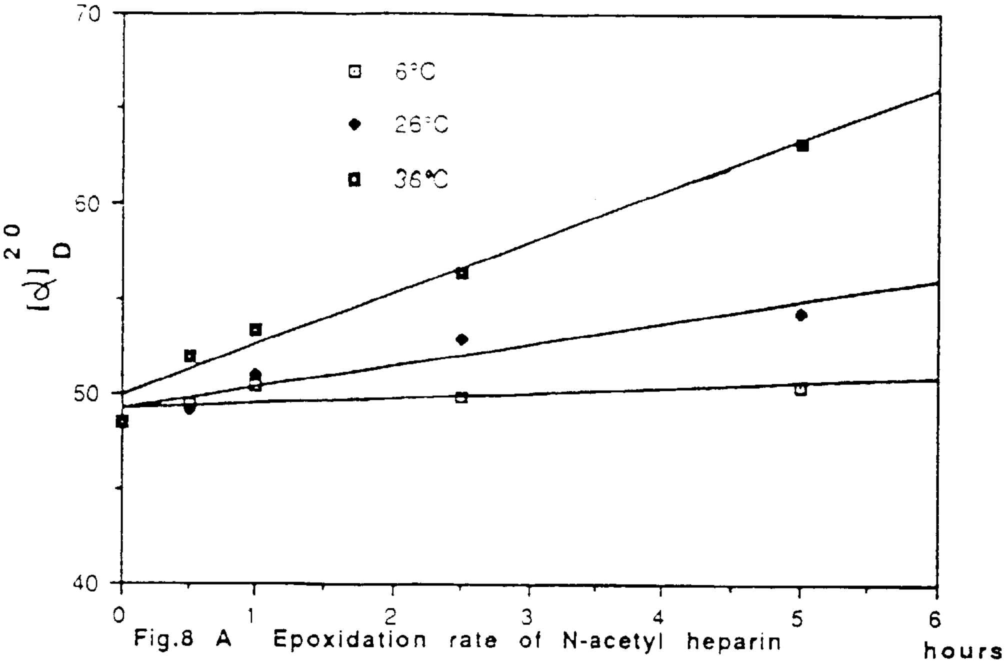


Fig.8 A Epoxidation rate of N-acetyl heparin

y = 49.225 + 0.26380x $R^2$ = 0.450
y = 49.112 + 1.1491x $R^2$ = 0.903
y = 49.830 + 2.7055x $R^2$ = 0.974

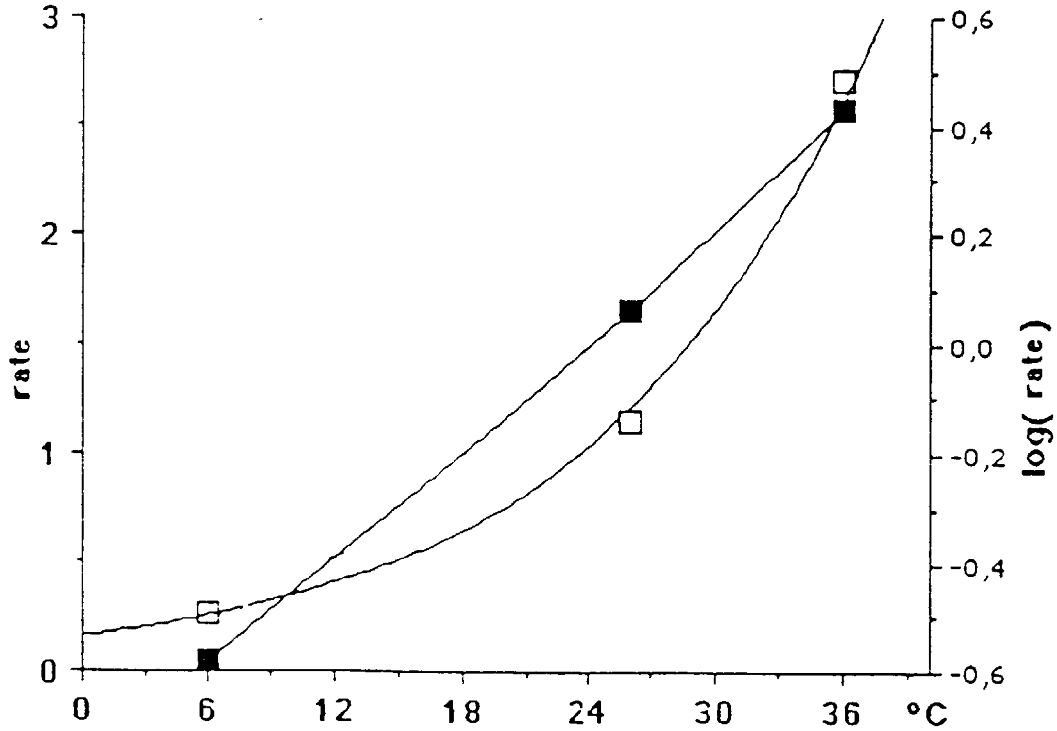


Fig.8 B. Variation in epoxidation rate of N-acetyl heparin vs temperature.

□—□ rate values expressed as angular coefficients of Fig. 8A ($y=0.1526\cdot 10\,(3.4341_c-2x)$ R = 0.999

■—■ log (rate) vs temperature. $y=0.81644+3.4341\cdot 10^{-2x}$ R = 0.999